# EUROPEAN PATENT SPECIFICATION

(11) **EP 3 149 100 B1**
(45) Date of publication and mention of the grant of the patent: **01.04.2020**
(21) Application number: 14735014.4
(22) Date of filing: 30.05.2014
(51) Int. Cl.: C09K 3/10, C08G 18/10, C08G 18/79, C08G 18/48, C08G 18/76, C09J 175/08

(54) **HYDROPHOBIC POLYOLS FOR SEALANT APPLICATIONS**
HYDROPHOBE POLYOLE FÜR DICHTUNGSMITTELANWENDUNGEN
POLYOLS HYDROPHOBES CONÇUS POUR DES APPLICATIONS FAISANT INTERVENIR DES MATÉRIAUX D'ÉTANCHÉITÉ

(43) Date of publication of application: 05.04.2017
(73) Proprietor: Dow Global Technologies LLC, Midland, MI 48674 (US)
(72) Inventor: LI, Wenwen, 2040 Dow center Midland Michigan 48674 (US); STEPHENSON, Amber, Lake Jackson, TX 77566 (US)
(74) Representative: Beck Greener LLP
(86) International application number: PCT/US2014/040250
(87) International publication number: WO 2015/183308

(56) References cited:
- US-A- 4 870 150
- US-A- 5 102 938
- US-A- 5 173 538
- US-A1- 2009 030 146
- US-A1- 2009 044 907

## Description

### Field

Embodiments relate to prepolymers for moisture-resistant sealant applicants, which prepolymers are based on hydrophobic polyols, and to both one-component and two-component systems that include such prepolymers.

### Introduction

There is increasing demand for high performance sealants that exhibit excellent mechanical performance under prolonged exposure to high humidity. Use of hydrophobic polyols can help improve the moisture resistance and hydrolytic stability of resulting polyurethane materials, while maintaining good ultimate mechanical properties as compared to traditional polyurethanes. Hydrophobic polyols based on hydrocarbon backbones, such as hydroxyl-terminated polybutadiene resins, are available in the market for the preparation of moisture-resistant polyurethane sealants. However, these polybutadiene polyols are often very viscous at room temperature, difficult to process and also lead to the formation of polyurethane materials with poor UV resistance. Accordingly, alternative hydrophobic polyols are sought.

US4870150A describes a high performance urethane sealant or coating composition made from a physical blend of a polypropyleneoxide polyol intermediate and a high molecular weight polybutyleneoxide polyol intermediate or copolymers thereof wherein the comonomer is preferably ethyleneoxide. The urethane prepolymer is made by reacting the physical intermediate blend with a polyisocyanate and preferably blocking the same with blocking agents such as phenols to prevent reaction with moisture in the air. Alternatively, the prepolymer can be end capped with an epoxy. Cure is effected through the utilization of curing agents such as polyamines or polyimines, e.g., diamines, amine terminated polyethers, ketimines, aldimines, and the like.

### Summary

Embodiments relate to a moisture curable sealant composition comprising a prepolymer that is a reaction product of an isocyanate component that includes at least one polyisocyanate and an isocyanate-reactive component that includes at least a polyoxybutylene -polyoxypropylene polyol, the polyol having a functionality from 1.6 to 3.5 and a number average molecular weight from 1500 to 8000 wherein the polyoxybutylene -polyoxypropylene polyol contains 50 to 85 percent by weight of polyoxybutylene.

In a further embodiment there is provided a method for forming a sealant comprising the steps of:
a) forming a first polyol mixture of polyoxyalkylene polyethers havin
   g an initiator nucleus attached to a plurality of oxyalkylenes wherein the oxyalkylene monomers comprise at least 50 to 85 weight percent of butylene oxide monomers and the initiator or mixture of initiators have a nominal functionality of 2 to 4 and the final polyol has a molecular weight of 1,500 to 8,000;
b) mixing the polyol mixture of step a) with a stoichiometric excess of a polyisocyanate or mixture of polyisocyanates to form a prepolymer having a free isocyanate (NCO) content of 2 to 5 weight percent of the prepolymer; and
c) forming a sealant by applying the prepolymer of step to a substrate.

A reactive curable sealant system, comprising:
a) a prepolymer that is a reaction product of an isocyanate component that includes at least one polyisocyanate and an isocyanate-reactive component that includes at least a polyoxybutylene -polyoxypropylene polyol, the polyol having a functionality from 1.6 to 3.5 and a number average molecular weight from 1500 to 8000 wherein the polyoxybutylene -polyoxypropylene polyol contains 50 to 85 percent by weight of polyoxybutylene and
b) a chain extender having 2 or more isocyanate reactive groups.

In a further embodiment is provided a method of forming a sealant comprising the steps of:
a) forming a first polyol mixture of polyoxyalkylene polyethers having an initiator nucleus attached to a plurality of oxyalkylenes wherein the oxyalkylene monomers comprise at least 50 to 85 weight percent of butylene oxide monomers and the initiator or mixture of initiators have a nominal functionality of 2 to 4 and the final polyol has a molecular weight of 1,500 to 8,000;
b) mixing the polyol mixture of step a) with a stoichiometric excess of a polyisocyanate or mixture of polyisocyanates to form a prepolymer having a free isocyanate (NCO) content of 1 to 6 weight percent of the prepolymer;
c) forming a sealant by reacting the prepolymer of step b) with a chain extender having a plurality of isocyanate reactive hydrogen.

### Detailed Description

Hydrophobic polyurethane based systems are used in various CASE (coatings, adhesives, sealants, and elastomers) applications. Exemplary moisture-resistant sealant applications include construction sealants for fenestration assemblies such as doors and windows, sealants for commercial and home spas, tubs, pools and showers, and sealants around gutters, sky lights and roof vents. It was unexpectedly found that although propylene oxide (PO) based polyols are less hydrophobic than those based on butylene oxide (BO), elastomeric sealants produced by the PO/BO based polyols of the present invention maintain good resistance to water uptake without a deterioration of the mechanical properties and resistance to UV degradation. Prepolymer based on the PO/BO polyols have a relatively low viscosity which makes them suitable for spray applications. That is the prepolymer will generally have a viscosity of 25 to 300 Pa.s at 25°C. In further embodiments the prepolymer will have a viscosity of less than 250, less than 200, or less than 180 Pa.s at 25°C. The sprayable formulations also exhibit high reactivity when sprayed onto a surface.

The sealant may be formed using a one-component or a two-component system, either of which includes a prepolymer component. The prepolymer may have a free isocyanate group (NCO) content of 1 wt% to 20 wt% (e.g., 2 wt% to 10 wt%, 2 wt% to 8 wt%, 2 wt% to 6 wt%, etc.), based on the total weight of the prepolymer. For example, the prepolymer may be prepared in an one-pot procedure.

The one-component system has a single component including at least one prepolymer. The prepolymer is formed by the reaction of an isocyanate component with an isocyanate-reactive component, in which the isocyanate component is present in a stochiometrically excess amount. When a polyol contains an active hydroxyl group, the reaction of the active hydroxyl group with an isocyanate moiety results in the formation of a urethane linkage. Accordingly, the prepolymer may include both a urethane linkage and an isocyanate terminal group.

The isocyanate component includes at least one polyisocyanate. The isocyanate-reactive component includes at least a hydrophobic polyol other than polybutadiene. The hydrophobic polyol is derived from butylene oxide and propylene oxide (e.g., is a reaction product of at least butylene oxide, propylene oxide, and an initiator such as an initiator that is known in the art of polyurethane). The hydrophobic polyol is a butylene oxide-propylene oxide (BO/PO) copolymer polyol having a polyoxybutylene content of at least 50 wt%, based on a total weight of the first BO/PO copolymer polyol.

The isocyanate-reactive component may include other polyether or polyester polyols. For example, the isocyanate-reactive component may include a propylene oxide and/or ethylene oxide based polyether polyol in addition to the butylene oxide-propylene oxide (BO/PO) copolymer polyol. For example, the isocyanate-reactive component may include a primary hydroxyl containing alcohol, e.g., that has a functionality from 1.6 to 3.5 and a number average molecular weight from 200 to 10,000 (e.g., 1000 to 5000, 1500 to 4000, 2000 to 3000, etc.). The primary hydroxyl containing alcohol may have an average of 1.8 to 2.2 terminal hydroxyl groups. For example, the primary hydroxyl containing alcohol is a polybutadiene, a polytetramethylene ether glycol (PTMEG), a polypropylene glycol (PPG), a polyoxypropylene, or a polyoxyethylene-polyoxypropylene.

The single component may be applied directly to a surface as a sealant. The single component may be moisture cured after application to the surface.

The two-component system includes a first component and a second component, of which one of the first and second components includes at least one prepolymer, which is the isocyanate-terminated prepolymer that is formed by the reaction of the isocyanate component with the isocyanate-reactive component that includes at least the hydrophobic polyol (i.e., the butylene oxide-propylene oxide (BO/PO) copolymer polyol). The other of the first and second components may include the hydrophobic polyol (as a polyol and not as a prepolymer). For example, hydrophobic polyol of the other of the first and second components may be a butylene oxide-propylene oxide (BO/PO) copolymer polyol, which has a polyoxybutylene content of at least 50 wt%, based on a total weight of the second BO/PO copolymer polyol. The hydrophobic polyol used in the two-component system may be the same as or different from the hydrophobic polyol used to form the prepolymer of the two-component system. The first and second components may be mixed immediately before being applied onto a surface as a sealant, e.g., a direct impingement mixing plural component spray gun may be used.

With respect to both the one-component system and the two-component, the BO/PO copolymer polyol has a greater weight percentage of polyoxybutylene than polyoxypropylene. For example, the first BO/PO copolymer polyol includes at least 50 wt%, at least 60 wt%, at least 70 wt%, at least 75 wt%, at least 80 wt%, and/or at least 85 wt% of polyoxybutylene units, of which a remainder based on 100 wt% total is accounted for with polyoxypropylene units. The first BO/PO copolymer polyol may have a number average molecular weight from 500 to 3,000 (e.g., 750 to 2,500, 1,000 to 2,200, etc.). The first BO/PO copolymer polyol may have a nominal average hydroxyl functionality from 1.6 to 3.5 (e.g., 1.8 to 3.2, 2 to 3, etc.). Accordingly to an exemplary embodiment, the first BO/PO copolymer polyol may be a diol or a triol, in which a total number average molecular weight of polyoxypropylene units is from 350 to 420 and a total number average molecular weight block of polyoxybutylene units is from 1500 to 1700. The polyol component may include at least one other polyether or polyester polyol in addition to the first BO/PO copolymer polyol and the optional primary hydroxyl containing polyol.

The first BO/PO copolymer polyol may be prepared by a polymerization reaction that includes adding propylene oxide and butylene oxide to an initiator having from 2 to 8 (e.g., 2 to 6, 2 to 4, etc.) active hydrogen atoms. The polyol may be a mixed oxide copolymer or a block copolymer. In one embodiment the BO/PO copolymer is has an internal block of PO with an external BO block. A catalyst for the polymerization may be anionic or cationic. Exemplary catalysts include, e.g., KOH, CsOH, boron trifluoride, and double-metal cyanide complex (DMC) catalysts such as a zinc hexacyanocobaltate or a quaternary phosphazenium compound.

The isocyanate component for forming the prepolymer (and optionally used in the one-component or two-component system in non-prepolymer form) includes at least one polyisocyanate (e.g., a diisocyanate). Exemplary isocyanates include aromatic, cycloaliphatic, and aliphatic isocyanates. For example, isocyanates known in the art may be used. Exemplary isocyanates include the 4,4'-, 2,4' and 2,2'-isomers of diphenylmethane diisocyante (MDI), blends thereof and polymeric and monomeric MDI blends, toluene-2,4- and 2,6-diisocyante (TDI) m- and p-phenylenediisocyanate, chlorophenylene-2,4-diisocyanate, diphenylene-4,4'-diisocyanate, 4,4'-diisocyanate-3,3'-dimethyldiphenyl, 3-methyldiphenyl-methane-4,4'-diisocyanate, diphenyletherdiisocyanate, 2,4,6-triisocyanatotoluene, 2,4,4'-triisocyanatodi phenylether, ethylene diisocyanate, and 1,6-hexamethylene diisocyanate. Derivatives of any of the foregoing polyisocyanate groups that contain, e.g., biuret, urea, carbodiimide, allophonate, and/or isocyanurate groups, may be used. According to an exemplary embodiment, the isocyanate component includes MDI, e.g., 40 to 99 wt% of the 4,4'-isomer of MDI.

The isocyanate-reactive component for forming the prepolymer (and optionally used in the two component system for forming one of the components) includes the BO/PO copolymer polyol, which has a polyoxybutylene content of at least 50 wt%, based on a total weight of the second BO/PO copolymer polyol. The isocyanate-reactive component may include optionally a catalyst, a curative, a pH neutralizer, a chain extender, and/or a crosslinker component.

The optional catalyst component may include at least one tin and/or amine based catalyst, e.g., that accounts for less than 5 wt% of a total weight of the second component. For example, a commercially available catalyst may be used. The catalysts may be used in small amounts, such as from 0.0015 wt% to 5 wt% (e.g., 0.01 wt% to 1.0 wt%, etc.)

Examples of catalysts include tertiary amines, tin carboxylates; organotin compounds; tertiary phosphines; various metal chelates; metal salts of strong acids, such as ferric chloride, stannic chloride, stannous chloride, antimony trichloride, bismuth nitrate and bismuth chloride, and the like. Tertiary amine and tin catalysts are generally preferred.

It is believed that representative tertiary amine catalysts include trimethylamine, triethylamine, N-methylmorpholine, N-ethylmorpholine, N,N-dimethylbenzylamine, N,N-dimethylethanolamine, N,N,N',N'-tetramethyl-1,4-butanediamine, N,N-dimethylpiperazine, 1,4-diazobicyclo-2,2,2-octane, bis(dimethylaminoethyl)ether, bis(2-dimethylaminoethyl) ether, morpholine,4,4'-(oxydi-2,1-ethanediyl)bis, triethylenediamine, pentamethyl diethylene triamine, dimethyl cyclohexyl amine, N-cetylN,N-dimethyl amine, N-coco-morpholine, N,N-dimethyl aminomethyl N-methyl ethanol amine, N, N, N'-trimethyl-N'-hydroxyethyl bis(aminoethyl) ether, N,N-bis(3-dimethylaminopropyl)N-isopropanolamine, (N,N-dimethyl) amino-ethoxy ethanol, N, N, N', N'-tetramethyl hexane diamine, 1,8-diazabicyclo-5,4,0-undecene-7, N,N-dimorpholinodiethyl ether, N-methyl imidazole, dimethyl aminopropyl dipropanolamine, bis(dimethylaminopropyl)amino-2-propanol, tetramethylamino bis (propylamine), (dimethyl(aminoethoxyethyl))((dimethyl amine)ethyl)ether, tris(dimethylamino propyl) amine, dicyclohexyl methyl amine, bis(N,N-dimethyl-3-aminopropyl) amine, 1,2-ethylene piperidine and methyl-hydroxyethyl piperazine.

It is believed that exemplary tin-containing catalysts include stannous octoate, dibutyl tin diacetate, dibutyl tin dilaurate, dibutyl tin dimercaptide, dialkyl tin dialkylmercapto acids, dibutyl tin oxide, dimethyl tin dimercaptide, dimethyl tin diisooctylmercaptoacetate, and the like.

The optional curative component may include at least one amine based curing agent. If included, the optional curative component may account for 5 wt% to 50 wt% (e.g., 10 wt% to 45 wt%, 15 wt% to 40 wt%, 20 wt% to 35 wt%, etc.) of the total weight of the second component. For example the amine based curing agent may be a bifunctional organic diamine compound (such as a toluene based diamine, a phenyl based diamine, an alkyl based dianiline, a polyether based diamine, or an isophorone based diamine) or a trifunctional organic diamine compound (such as a phenyl based triamine, an alkyl based tramine, or a propylene based triamine). Exemplary amine based curing agents are available from Albemarle Corporation under the trademark Ethacure.

The optional chain extender component may include at least one chain extender that has two isocyanate-reactive groups per molecule, such as hydroxyl or amine groups, and may have an equivalent weight per isocyanate-reactive group of less than 400. For example, the chain extender may be blended with the second BO/PO copolymer polyol or may be provided separately during the formation of the first component. If included, the chain extender component may be present in an amount from 0.1 wt% to 15 wt% (e.g., 0.2 wt% to 10 wt%, etc.), based on a total weight of the second component.

For the two-component system, in addition to the isocyanate component, the other component is a chain extender. The chain extender may be a hydrophobic polyol containing BO/PO as described herein wherein the polyol has a molecular weight up to 1000. Other polyols, diols or triols, as previously described herein and with a with a molecular weight up to 1000 may be used as the chain extender. In further embodiments the chain extender used in the two-component systems is a chain extender as described above. In a further embodiment the isocyanate reactive groups are hydroxyl groups. The amount of chain extender used in the two component system is generally used in an amount of 1.5 to 15 wt% of the total weight of the polyisocyanate and chain extender components.

A plasticizer may be present. If present, the plasticizer preferably is mixed with the poly(1,2-butylene oxide) polymer to reduce its viscosity and so facilitate mixing with the polyisocyanate, which typically has a much lower viscosity. Examples of suitable plasticizers include liquid (at 25°C) esters of monocarboxylic acids and diesters of dicarboxylic acids having molecular weights of up to about 300. Among these are, for example, dialkyl phthalate esters, dialkyl terephthalate esters, trialkyl trimellitates, dialkyl adipate esters, dialkyl maleate esters, dialkyl sebacate esters, alkanolic acid diesters of alkylene glycols, alkanoic acid diesters of polyalkylene glycols, and the like.

The amount of plasticizer, if used, may range from 1 to 30% of the combined weight of the plasticizer and all reactive materials (isocyanates and isocyanate reactive materials) provided to the reaction mixture. An exemplary amount is from 5 to 25%, in some embodiments 10 to 25%, and in other embodiments 15 to 20% by weight, etc. In addition, smaller amounts of plasticizer in the sealant reduce the risk and severity of fogging due to the leaching of the plasticizer.

Fillers can be present to provide desired rheological properties and reduce cost. Examples of fillers include inorganic particulate materials such as talc, titanium dioxide, calcium carbonate, calcium oxide, mica, wollastonite, fly ash and the like; metal particles; carbon black; graphite; high melting organic polymers, and the like. The particle size of these fillers (as determined using screening methods) may be up to 50 microns. When present in the composition of the present inventions, the filler preferably has a particle size of 0.01 to 30 microns. Fillers may constitute up to 90% by weight of the curable reaction mixture (e.g., 25 wt% to 80 wt%).

According to exemplary embodiments, a ratio of equivalents of isocyanate groups in to the active hydrogen atoms for forming the prepolymer is from 100 to 300 (e.g., 120 to 250, 160 to 240, etc.). As would be understood by a person of ordinary skill in the art, the isocyanate index is the molar equivalents of isocyanate (NCO) groups divided by the total molar equivalents of isocyanate-reactive hydrogen atoms present in a formulation, multiplied by 100. A ratio of equivalents of isocyanate groups in to the active hydrogen atoms in the two-component system for forming the sealant may be from 85 to 150 (e.g., 85 to 115, 90 to 110, etc.).

A sealant is formed by forming a curable reaction mixture, applying it to a surface (such as an interface between and in contact with said glass and said substrate) and then curing the curable reaction mixture to form an elastomeric seal.

The reaction mixture is formed by mixing the foregoing necessary and optional (if any) components. In the two-component system, the first component may include the isocyanate-reactive components, including the BO/PO copolymer polyol, any optional chain extender, and any optional crosslinker. The second component includes the polyisocyanate compound(s). The catalyst(s) can be formulated into either or both of these components, but usually are formulated into the first component. The plasticizer and fillers if any is provided, it may be incorporated into the first component.

Mixing and application can be done in any convenient manner. In the case in which the ingredients are formulated into two components, the components may be simply combined at ambient temperature or any desirable elevated temperature, deposited onto the substrate, and allowed to react. The mixing of the components can be done in any convenient way, depending on the particular application and available equipment. Mixing of the components can be done batchwise, mixing them by hand or by using various kinds of batch mixing devices, followed by application by brushing, pouring, applying a bead and/or in other suitable manner. The two components can be packaged into separate cartridges and simultaneously dispensed through a static mixing device to mix and apply them, typically as a bead, onto the interface.

Various other additives may be added to the systems to adjust characteristics of the resultant sealant, e.g., those known to those skilled in the art may be used. For example, pigments (such as titanium dioxide and/or carbon black), may be used to impart color properties. Pigments may be in the form of solids or the solids may be pre-dispersed in a resin carrier. Reinforcements (e.g., flake or milled glass and/or fumed silica), may be used to impart certain properties. Other additives include, e.g., UV stabilizers, antioxidants, air release agents, and adhesion promoters, which may be independently used depending on the desired characteristics of the protective coating.

All parts and percentages are by weight, unless indicated otherwise. All values for molecular weight are based on number average molecular weight, unless indicated otherwise.

### Examples

A description of the materials used in the examples is as follows:

| | |
|---|---|
| BO/PO Polyol | A polyether polyol including polyoxypropylene units (with a number average molecular weight of approximately 390) and polyoxybutylene units (with a number average molecular weight of approximately 1600), having an average nominal hydroxyl functionality of 2, a total number average molecular weight of approximately 2000 g/mole, and a propylene oxide content of approximately 20 wt% and a polybutylene oxide content of approximately 80 wt%, based on a total weight of the copolymer polyol. |
| BO Polyol | A polyol of polyoxybutylene units, having an average nominal hydroxyl functionality of approximately 2, and a number average molecular weight of approximately 2000 g/mole (available from The Dow Chemical Company). |
| PO Polyol | A polyol including polypropylene units, having an average nominal hydroxyl functionality of approximately 2, and a total number average molecular weight of approximately 2000 g/mole (available from The Dow Chemical Company as VORANOL™ 220-056N). |
| PolyBd | A hydroxyl terminated polybutadiene resin, having a number average molecular weight of approximately 2100 g/mol (available from Cray Valley as Krasol® LBH 2000). |
| H-PolyBd | A hydroxyl terminated hydrogenated-polybutadiene resin, having an average having a number average molecular weight of approximately 2100 g/mole (available from Cray Valley as Krasol® HLBH-P 2000). |
| ISONATE™ 143L | A modified MDI that is a polycarbodiimide-modified diphenylmethane diisocyanate (available from The Dow Chemical Company). |
| PAPI™ 27 | A polymeric MDI (available from The Dow Chemical Company). |
| Additive 1 | A plasticizer that includes a high molecular weight benzyl phthalate (available as Santicizer® 278 from Ferro). |
| Additive 2 | A surface-treated precipitated calcium carbonate with fine particle size and narrow particle size distribution, median particle size around 0.7 microns (available as Super-Pflex® 100 from Minerals Technologies). |
| Additive 3 | A surface treated, nano-sized, premium quality precipitated calcium carbonate with a very narrow particle size distribution combined with nearly spherical particle geometry and median particle size of 70 nanometers (available as Ultra-Pflext 100 from Minerals Technologies). |
| DMDEE | A catalyst that includes 2,2'-dimorpholinodiethylether (available as Niax™ catalyst DMDEE from Momentive). |
| DBTDL | A catalyst that includes dibutyltin dilaurate (available as Dabco® T-12 from Air Products). |

As shown below, the BO/PO copolymer polyol can be used for both one-component and two-component sealant applications, leading to the formation of resins with both good hydrophobicity and UV stability.

### One-Component Systems

Referring to Table 1, below, a comparison of one-component systems is performed using the BO/PO Polyol, the BO Polyol, and the PO Polyol. Working Example 1 includes the BO/PO copolymer polyol. Comparative Example A includes the BO Polyol and Comparative Example B includes the PO Polyol. For Working Example 1 and Comparative Examples A and B, a prepolymer is formed using the designated polyol and ISONATE™ 143L at an isocyanate index of 181. In particular 160 grams of the designated polyol and 40 grams of the ISONATE™ 143L are mixed in a three neck round bottom flask while purging with dry nitrogen. The reaction mixture is stirred using an overhead stirrer at 300 rpm and heated to 80 °C over the course of half an hour to facilitate formation of prepolymers. The reaction mixture is maintained at 80 °C for an additional 6.5 hours. After 7 hours, the reaction mixture is transferred to a glass jar and degassed in a vacuum chamber for half an hour. The resultant prepolymers in the reaction mixture have a free isocyanate group (i.e., NCO) content as shown in Table 1.

**Table 1**

| **Polyol** | **Prepolymer** | | **Cured film** | | | | **Water treatment*** | | | |
|---|---|---|---|---|---|---|---|---|---|---|
| | NCO (%) | Viscosity (Pa.s at 25 °C) | Tack free time (hour) | Tensile strength (psi) | Elongation % | Stress @ 100% (psi) | Water absorp (%) | Tensile strength (psi) | Elongation % | Stress @ 100% (psi) |
| BO/PO (Ex. 1) | 2.7 | 55 | 12 | 615 (4.24 x 10⁶ Pa) | 650 | 150 (1.03 x 10⁶ Pa) | 1.3% | 490 (3.38 x 10⁶ Pa) | 520 | 140 (9.65 x 10⁵ Pa) |
| BO (Ex.A) | 2.3 | 88 | 10 | 401 (2.76 x 10⁶ Pa) | 475 | 116 (7.99 x 10⁵ Pa) | 0.8% | 327 (2.26 x 10⁶ Pa) | 440 | 110 (7.58 x 10⁵ Pa) |
| PO (Ex.B) | 2.7 | 32 | 6 | 564 (3.89 x 10⁶ Pa) | 1690 | 45 (3.10 x 10⁵ Pa) | 1.8% | 380 (2.62 x 10⁶ Pa) | 980 | 55 (3.79 x 10⁵ Pa) |

| | | | | | | | | | | |
|---|---|---|---|---|---|---|---|---|---|---|
| * Water treatment refers to submersion in water for 7 days at room temperature. | | | | | | | | | | |

The designated prepolymers for Working Example 1 and Comparative Examples A and B are mixed with DMDEE catalyst (1 drop of DMDEE per 50 g of prepolymer) using a FlackTek mixer. The mixture is then degassed in a vacuum chamber until all bubbles disappear. A film is cast on a polypropylene substrate and allowed to cure at ambient temperature for 7 days. The film then is carefully removed from the substrate after 7 days for analysis. The cured films have a thickness of approximately 50 mil (0.0013 m). Referring to Table 1, the cured films are evaluated for tack free time (according to ASTM D5895), tensile strength (according to ASTM D1708), elongation % (according to ASTM D1708), and stress @ 100% (according to ASTM D1708). A water treatment test (submersion in water for 7 days at room temperature) is also performed with the cured films of Working Example 1 and Comparative Examples A and B. Referring to Table 1, above, after submersion in water for the 7 days at room temperature, the cured films are evaluated for water absorption, tensile strength, elongation %, and stress @ 100%. The water submersion test is performed by placing 2x2 inch cured samples of each of Working Example 1 and Comparative Examples A and B in water at room temperature (approximately 25 °C) for a period of seven days. After the exposure period, samples are patted dry with a paper towel and stored in Ziploc bags. Replicated "dog bones" were cut from each square sample for analysis. Working Example 1 leads to the formation of moisture-cured films with lower water absorption and better retention of mechanical properties after being immersed in water compared to Comparative Example B (PO Polyol) and with equivalent retention of mechanical properties compared to Comparative Example A (BO Polyol) after being immersed in water.

Referring to Tables 2 and 3, below, moisture cured resins are prepared with BO/PO Polyol and the PolyBd. Working Example 2 includes the BO/PO Polyol and Comparative Example C includes the PolyBd. It is believed that H-PolyBd based prepolymers are too viscous and are not suitable for one-component sealant application. For Working Example 2 and Comparative Example C, a prepolymer is formed using the designated polyol and ISONATE™ 143L at an isocyanate index of 241. In particular 150 grams of the designated polyol and 50 grams of the ISONATE™ 143L are mixed in a three neck round bottom flask while purging with dry nitrogen. The reaction mixture is stirred using an overhead stirrer at 300 rpm and heated to 80 °C over the course of half an hour to facilitate formation of prepolymers. The reaction mixture is maintained at 80 °C for an additional 6.5 hours. After 7 hours, the reaction mixture is transferred to a glass jar and degassed in a vacuum chamber for a half an hour. The resultant prepolymers in the reaction mixture have a free isocyanate group (i.e., NCO) content as shown in Table 2.

**Table 2**

| **Polyol** | **Prepolymer*** | | **Cured film*** | | | |
|---|---|---|---|---|---|---|
| | NCO (%) | Viscosity (Pa.s at 25 °C) | Tack free time (hour) | Tensile strength (psi) | Elongation % | Stress @ 100% (psi) |
| BO/PO (Ex.2) | 3.92 | 44 | 8 | 670 (4.62 x 10⁶ Pa) | 306 | 295 (2.03 x 10⁶ Pa) |
| PolyBd (Ex. C) | 4.57 | 200 | 9 | 1890 (1.30 x 10⁷ Pa) | 305 | 1070 (7.38 x 10⁶ Pa) |

The cured film is prepared through a moisture curing process. The designated prepolymers for Working Example 2 and Comparative Examples C are mixed with DMDEE catalyst (1 drop of DMDEE per 50 g of prepolymer) using a FlackTek mixer. The mixture is then degassed in a vacuum chamber until all bubbles disappeared. A film is cast on a polypropylene substrate and allowed to cure at ambient temperature for 7 days. The film is carefully removed from the substrate after 7 days for analysis. The cured films have a thickness of approximately 50 mil (0.0013 m). Referring to Table 2, the cured films are evaluated for tack free time, tensile strength, elongation, and stress @ 100%.

**Table 3**

| **Polyol** | **Water treatment*** | | | | **UV and moisture aging**** | | |
|---|---|---|---|---|---|---|---|
| | Water absorption (%) | Tensile strength (psi) | Elongation (%) | Stress @ 100% (psi) | Tensile strength (psi) | Elongation % | Stress @ 100% (psi) |
| BO/PO (Ex.2) | 1.0% | 825 (5.69 x 10⁶ Pa) | 370 | 290 (1.99 x 10⁶ Pa) | 440 (3.03 x 10⁶ Pa) | 280 | 205 (1.41 x 10⁶ Pa) |
| PolyBd (Ex. C) | < 0.5% | 2190 (1.51 x 10⁷ Pa) | 337 | 1105 (7.62 x 10⁶ Pa) | 120 (8.27 x 10⁵ Pa) | 30 | n/a |

| | | | | | | | |
|---|---|---|---|---|---|---|---|
| * Water treatment refers to submersion in water for 7 days at room temperature. ** The UV and moisture aging refers to repeating cycles of 4 hours UV aging at 60 °C and 4 hours of moisture aging at 50 °C cycle for a total of 160 hours. | | | | | | | |

The water treatment test (submersion in water for 7 days at room temperature) and an UV and moisture aging test are performed with the cured films of Working Example 2 and Comparative Example C. Referring to Table 3, above, after submersion in water for the 7 days at room temperature, the cured films are evaluated for water absorption, tensile strength, elongation, and stress @ 100%. After UV and moisture ageing, the cured films are evaluated for tensile strength, elongation, and stress @ 100%.

Comparing Working Example 2 and Comparative Example C, the cured film of Comparative Example does demonstrate higher tensile strength and modulus, and similar elongation. However, the materials prepared from Working Example 2 shows improved stability with respect to UV and moisture aging. In particular, after being aged for 160 h, the cured film of Working Example 2 retains approximately 65% of the original tensile strength and approximately 75% of elongation. In contrast, the cured film of Comparative Example C becomes very brittle, with elongation reduced from 300% down to 30% (possibly due to the poor UV resistance). Further, referring to Table 2, Comparative Example C has a significantly higher viscosity, which may limit its application for one-component sealants.

Referring to Table 4, below, Working Example 3 and Comparative Example D are prepared as moisture cured one-component formulated sealant samples. As shown below, the tack-free time, Shore A hardness, tensile strength, elongation %, and stress @ 100% are measured for the resultant cured sealant. The one-component sealant formed with the BO/PO Polyol parallels that which is seen with the conventionally used PO Polyol, but with expected improved hydrophobicity and hydrolytic stability. Accordingly, the BO/PO polyol is also useable in cured sealant applications.

**Table 4**

| | **Working Example 3** | **Comparative Example D** |
|---|---|---|
| **Formulation** (parts by weight) | | |
| BO/PO Polyol | 46 | -- |
| PO Polyol | -- | 46 |
| Additive 1 | 20 | 20 |
| Additive 2 | 21 | 21 |
| Additive 3 | 9.9 | 9.9 |
| DMDEE | 0.5 | 0.5 |
| PAPI™ 27 | 1 | 1 |

| **Properties of Moisture Cured Sealant** | | |
|---|---|---|
| Tack-free time (min) | 45 | 30 |
| Hardness (Shore A) | 42 | 41 |
| Tensile strength (psi) | 155 (1.07 x 10⁶ Pa) | 145 (9.99 x 10⁵ Pa) |
| Elongation % | 374 | 434 |
| Stress @100% (psi) | 72 (4.96 x 10⁵ Pa) | 63 (4.34 x 10⁵ Pa) |

### Two-Component Systems

Referring to Tables 5 and 6, below, a comparison of two-component systems is performed using the BO/PO Polyol, the BO Polyol, the PO Polyol, PolyBd, and H-PolyBd, with either 1,4-butanediol (BDO) or 2-ethyl hexane diol (EHD) as a cross-linker/chain extender.

**Table 5**

| **Polyol** | **Chain extender** | **Hard segment fraction** | **Cured film*** | | | |
|---|---|---|---|---|---|---|
| | | | Hardness (Shore A) | Tensile strength (psi) | Elongation % | Stress @ 100% (psi) |
| BO/PO (Ex.4) | BDO | 22% | 51 | 1160 (7.99 x 10⁶ Pa) | 995 | 120 (8.27 x 10⁵ Pa) |
| PO (Ex.E) | BDO | 22% | 52 | 618 (4.26 x 10⁶ Pa) | 825 | 120 (8.27 x 10⁵ Pa) |
| BO (Ex.F) | BDO | 22% | 47 | 595 (4.10 x 10⁶ Pa) | 904 | 86 (5.92 x 10⁵ Pa) |
| PolyBd (Ex.G) | EHD | 23% | 69 | 1730 (1.19 x 10⁷ Pa) | 640 | 295 (2.03 x 10⁶ Pa) |
| H-PolyBd (Ex.H) | EHD | 23% | 72 | 2335 (1.61 x 10⁷ Pa) | 560 | 465 (3.21 x 10⁶ Pa) |
| PolyBd (Ex.1) | EHD | 16% | 58 | 425 (2.93 x 10⁶ Pa) | 425 | 155 (1.07 x 10⁶ Pa) |
| H-PolyBd (Ex.J) | EHD | 16% | 56 | 690 (4.76 x 10⁶ Pa) | 455 | 185 (1.28 x 10⁶ Pa) |

For Working Example 4 and Comparative Examples E and F, a prepolymer is formed first using the designated polyol and ISONATE™ 143L at an isocyanate index of 181. In particular 160 grams of the designated polyol and 40 grams of the ISONATE™ 143L are mixed in a three neck round bottom flask while purging with dry nitrogen. The reaction mixture is stirred using an overhead stirrer at 300 rpm and heated to 80 °C over the course of a half an hour to facilitate formation of prepolymers in the reaction mixture. The reaction mixture is maintained at 80 °C for an additional 6.5 hours. After 7 hours, the reaction mixture is transferred to a glass jar and degassed in a vacuum chamber for a half an hour. The resultant prepolymer is then mixed with BDO. The resultant mixture is placed between Teflon-coated sheets with a 25 mil (0.0006 m) metal spacer to set the thickness, compression molded for 30-40 min at 50 °C, and then post-cured in an oven set at 80 °C for 20 h. The cured films are carefully peeled off from the substrate after curing and stored at room temperature for 1 week before analysis. For Comparative Examples G to J, the polyols are directly mixed with EHD and ISONATE 143L. The mixture is then placed between Teflon-coated sheets with a 25 mil (0.0006 m) metal spacer to set the thickness, compression molded for 30-40 min at 50 °C, and then post-cured in an oven set at 80 °C for 20 h. The cured films are carefully peeled off from the substrate after curing and stored at room temperature for 1 week before analysis. The cured films have a thickness of approximately 25 mil (0.0006 m). Referring to Table 4, the cured films are evaluated for Shore A Hardness (according to ASTM D-2240) tack free time (according to ASTM D-5895), tensile strength, elongation, and stress @ 100% (according to ASTM D-1708).

Referring to Table 5, above, with similar hard segment fraction, 22-23%, cured material with lower hardness is obtained for Working Example 4 and Comparative Examples E & F. These materials also show higher elongation and lower modulus, which is sought after for sealant applications. Referring to Comparative Examples G to J, cured materials with lower hardness can be obtained with less hard segment introduced to the formulation, but the cured products showed low elongation <500%.

Referring to Table 6, below, the water treatment test and the UV and moisture aging test are also performed with the cured films of Working Example 4 and comparative Examples E to J.

**Table 6**

| **Polyol** | **Water treatment** | | | | **UV and moisture aging*** | | |
|---|---|---|---|---|---|---|---|
| | Water Absorp. (%) | Tensile strength (psi) | Elongation % | Stress @ 100% (psi) | Tensile strength (psi) | Elongation % | Stress @ 100% (psi) |
| BO/PO (Ex.4) | 0.8% | 1065 (7.34 x 10⁶ Pa) | 875 | 125 (8.62 x 10⁵ Pa) | 475 (3.28 x 10⁶ Pa) | 1110 | 50 (3.44 x 10⁵ Pa) |
| PO (Ex.E) | 2.5% | 412 (2.84 x 10⁶ Pa) | 621 | 120 (8.27 x 10⁵ Pa) | 563 (3.88 x 10⁶ Pa) | 1536 | 55 (3.79 x 10⁵ Pa) |
| BO (Ex.F) | 0.5% | 570 (3.93 x 10⁶ Pa) | 770 | 94 (6.48 x 10⁵ Pa) | 307 (2.12 x 10⁶ Pa) | 1392 | 26 (1.79 x 10⁵ Pa) |
| PolyBd (Ex.G) | 0.5% | 1710 (1.18 x 10⁷ Pa) | 540 | 365 (2.52 x 10⁶ Pa) | 510 (3.52 x 10⁶ Pa) | 115 | 485 (3.34 x 10⁶ Pa) |
| H-PolyBd (Ex.H) | 0.5% | 1860 (1.28 x 10⁶ Pa) | 490 | 465 (3.21 x 10⁶ Pa) | 985 (6.79 x 10⁶ Pa) | 270 | 475 (3.28 x 10⁶ Pa) |
| PolyBd (Ex.I) | 0.4% | 510 (3.52 x 10⁶ Pa) | 420 | 175 (1.20 x 10⁶ Pa) | 245 (1.69 x 10⁶ Pa) | 145 | 215 (1.48 x 10⁶ Pa) |
| H-PolyBd (Ex.J) | 0.5% | 615 (4.24 x 10⁶ Pa) | 455 | 175 (1.20 x 10⁶ Pa) | 320 (2.21 x 10⁶ Pa) | 220 | 195 (1.34 x 10⁶ Pa) |

| | | | | | | | |
|---|---|---|---|---|---|---|---|
| * The UV and moisture aging refers to a cycle of 4 hours UV ageing at 60 °C and 4 hours of moisture aging at 50 °C cycle for a total of 72 hours. | | | | | | | |

After immersion in water, limited water uptake (<1%) and loss of mechanical properties (∼10%) were observed for PO/BO, BO and polyBD based materials, indicating the good hydrophobicity, while cured materials based on PO polyols (Comparative Example E) showed higher water absorption (2.5%) and worse retention of tensile properties (25-35% reduction of elongation and tensile strength).

The cured materials also showed very different properties after aging under UV and moisture. Referring to Table 6, above, Working Example 4 retains approximately 43% of the original tensile strength and over 100% elongation. Comparative Example E shows comparatively lower moisture stability. Comparative Examples F to J, show a significant reduction of elongation (e.g., >70%). Further, the H-PolyBd polyols provides the additional issue of being very viscous at room temperature (37 Pa.s at 25 °C), difficult to handle, and higher in cost.

Referring to Table 7, below, Working Example 5 and Comparative Examples K to M are prepared as two component sealants with filler. For Working Example 5 and Comparative Examples K, a prepolymer is formed first using the designated polyol (one of the BO/PO polyol and the PO polyol) and ISONATE™ 143L at an isocyanate index of 181. In particular, 160 grams of the designated polyol and 40 grams of the ISONATE™ 143L are mixed in a three neck round bottom flask while purging with dry nitrogen. The reaction mixture is stirred using an overhead stirrer at 300 rpm and heated to 80 °C over the course of a half an hour to facilitate formation of prepolymers in the reaction mixture. The reaction mixture is maintained at 80 °C for an additional 6.5 hours. After 7 hours, the reaction mixture is transferred to a glass jar and degassed in a vacuum chamber for a half an hour. The resultant prepolymers are then mixed with PAP1™ 27 to form Component A, meanwhile Component B is prepared by mixing BDO, T-12 catalyst and other additives. Component A is then mixed with Component B using FlackTek mixer, and a 50 mil (0.0013 m) thick film is cast on a polyethylene substrate and allowed to cure in an oven set at 60 °C for 20 h. The film is carefully peeled off from the substrate after curing. For Working Comparative Examples K and M, ISONATE™ 143L is mixed with PAP1™ 27 to form Component A, meanwhile the designated polyol (PolyBd and H-PolyBd polyols) is mixed with EHD, additives and T-12 first to form Component B, the resulting Component A is then mixed with Component B using FlackTek mixer under nitrogen protection. Finally, a 50 mil (0.0013 m) thick film is cast on a polyethylene substrate and allowed to cure in an oven set at 60 °C for 20 h. The film is carefully peeled off from the substrate after curing and tensile properties were measured.

**Table 7**

| | **Working Example 5** | **Comparative Example K** | **Comparative Example L** | **Comparative Example M** |
|---|---|---|---|---|
| **Component A Formulation** (parts by weight) | | | | |
| BO/PO Copolymer Polyol Prepolymer | 48 | -- | -- | -- |
| PO Polyol Prepolymer | -- | 48 | -- | -- |
| ISONATE™ 143L | -- | -- | 7.9 | 7.9 |
| PAP1™ 27 | 0.8 | 0.8 | -- | -- |

| **Component B Formulation** (parts by weight) | | | | |
|---|---|---|---|---|
| BDO | 1.25 | 1.25 | -- | -- |
| EHD | -- | -- | 0.63 | 0.63 |
| PolyBd | -- | -- | 40.7 | -- |
| H-PolyBd | -- | -- | -- | 40.7 |
| Additive 1 | 18 | 18 | 18 | 18 |
| Additive 2 | 21 | 21 | 21 | 21 |
| Additive 3 | 9.9 | 9.9 | 9.9 | 9.9 |
| DBTDL | 0.02 | 0.02 | 0.02 | 0.02 |

| **Properties of Cured Sealant** | | | | |
|---|---|---|---|---|
| Hardness (Shore A) | 40 (2.76 x 10⁵ Pa) | 40 (2.76 x 10⁵ Pa) | 40 (2.76 x 10⁵ Pa) | 40 (2.76 x 10⁵ Pa) |
| Tensile strength (psi) | 460 (3.17 x 10⁶ Pa) | 370 (2.55 x 10⁶ Pa) | 370 (2.55 x 10⁶ Pa) | 345 (2.38 x 10⁶ Pa) |
| Elongation % | 810 | 950 | 950 | 920 |
| Stress @100% (psi) | 82 (5.65 x 10⁵ Pa) | 74 (5.10 x 10⁵ Pa) | 74 (5.10 x 10⁵ Pa) | 73 (5.03 x 10⁵ Pa) |

For two-component sealant application, Working Example 5 shows the formation of medium modulus sealant having a good elongation 800% and modulus @100% of 82 psi (5.65 x 10⁵ Pa). The two-component sealant formed with the BO/PO Polyol parallels that which is seen with the conventionally used PO Polyol and polyBD. Accordingly, the BO/PO polyol is also useable in two-component sealant applications.

## Claims

1. A moisture curable sealant system, comprising:
a prepolymer that is a reaction product of an isocyanate component that includes at least one polyisocyanate and an isocyanate-reactive component that includes at least a polyoxybutylene -polyoxypropylene polyol, the polyol having a functionality from 1.6 to 3.5 and a number average molecular weight from 1500 to 8000 wherein the polyoxybutylene -polyoxypropylene polyol contains 50 to 85 percent by weight of polyoxybutylene.

2. The curable sealant system of claim 1 wherein the prepolymer has a free isocyanate content of from 1 to 6 weight percent of the prepolymer.

3. The curable sealant system of claim 1 or 2 wherein the polyol has a molecular weight of 1700 to 6000.

4. The curable sealant system of any one of claims 1 to 3 wherein the prepolymer has a viscosity of 25 to 300 Pa.s at 25°C.

5. The curable sealant system of claim 4 wherein the polyisocyanate is a monomeric diphenylmethane diisocyanate, polycarbodiimide-modified diphenylmethane diisocyanate, a polymeric diphenylmethane diisocyanate or a combination thereof.

6. A method of forming a sealant comprising the steps of:
a) forming a first polyol mixture of polyoxyalkylene polyethers having an initiator nucleus attached to a plurality of oxyalkylenes wherein the oxyalkylene monomers comprise at least 50 to 85 weight percent of butylene oxide monomers and the initiator or mixture of initiators have a nominal functionality of 2 to 4 and the final polyol has a molecular weight of 1,500 to 8,000;
b) mixing the polyol mixture of step a) with a stoichiometric excess of a polyisocyanate or mixture of polyisocyanates to form a prepolymer having a free isocyanate (NCO) content of 2 to 5 weight percent of the prepolymer;
c) forming a sealant by applying the prepolymer of step b) to a substrate.

7. The method of claim 6 wherein the prepolymer has a free isocyanate content of from 2 to 5 weight percent of the prepolymer.

8. The method of claim 6 or 7 wherein the polyol has a molecular weight of 1700 to 6000.

9. The method of any one of claims 6 to 8 wherein the prepolymer has a viscosity of 25 to 300 Pa.s at 25°C.

10. The curable sealant system of claim 9 wherein the polyisocyanate is a polycarbodiimide-modified diphenylmethane diisocyanate, a polymeric diphenylmethane diisocyanate or a combination thereof.

11. A reactive curable sealant system, comprising:
a) a prepolymer that is a reaction product of an isocyanate component that includes at least one polyisocyanate and an isocyanate-reactive component that includes at least a polyoxybutylene -polyoxypropylene polyol, the polyol having a functionality from 1.6 to 3.5 and a number average molecular weight from 1500 to 8000 wherein the polyoxybutylene -polyoxypropylene polyol contains 50 to 85 percent by weight of polyoxybutylene and
b) a chain extender having 2 or more isocyanate reactive groups.

12. A method of forming a sealant comprising the steps of:
a) forming a first polyol mixture of polyoxyalkylene polyethers having an initiator nucleus attached to a plurality of oxyalkylenes wherein the oxyalkylene monomers comprise at least 50 to 85 weight percent of butylene oxide monomers and the initiator or mixture of initiators have a nominal functionality of 2 to 4 and the final polyol has a molecular weight of 1,500 to 8,000;
b) mixing the polyol mixture of step a) with a stoichiometric excess of a polyisocyanate or mixture of polyisocyanates to form a prepolymer having a free isocyanate (NCO) content of 1 to 6 weight percent of the prepolymer;
c) forming a sealant by reacting the prepolymer of step b) with a chain extender having a plurality of isocyanate reactive hydrogen.

13. The method of claim 12 wherein the prepolymer has a free isocyanate content of from 2 to 5 weight percent of the prepolymer.

14. The method of claim 12 or 13 wherein the polyol has a molecular weight of 1700 to 6000.

15. The method of any one of claims 12 to 14, wherein the prepolymer has a viscosity of 25 to 300 Pa.s at 25°C.

## Patentansprüche

1. Ein feuchtigkeitshärtbares Dichtungsmittelsystem, das Folgendes beinhaltet:
ein Präpolymer, das ein Reaktionsprodukt einer Isocyanatkomponente ist, die mindestens ein Polyisocyanat und eine isocyanatreaktive Komponente umfasst, die mindestens ein Polyoxybutylenpolyoxypropylenpolyol umfasst, wobei das Polyol eine Funktionalität von 1,6 bis 3,5 und ein Zahlenmittel des Molekulargewichts von 1 500 bis 8 000 aufweist, wobei das Polyoxybutylenpolyoxypropylenpolyol zu 50 bis 85 Gewichtsprozent Polyoxybutylen enthält.

2. Härtbares Dichtungsmittelsystem gemäß Anspruch 1, wobei das Präpolymer einen Gehalt an freiem Isocyanat von 1 bis 6 Gewichtsprozent des Präpolymers aufweist.

3. Härtbares Dichtungsmittelsystem gemäß Anspruch 1 oder 2, wobei das Polyol ein Molekulargewicht von 1 700 bis 6 000 aufweist.

4. Härtbares Dichtungsmittelsystem gemäß einem der Ansprüche 1 bis 3, wobei das Präpolymer eine Viskosität von 25 bis 300 Pa•s bei 25 °C aufweist.

5. Härtbares Dichtungsmittelsystem gemäß Anspruch 4, wobei das Polyisocyanat ein monomeres Diphenylmethandiisocyanat, ein polycarbodiimidmodifiziertes Diphenylmethandiisocyanat, ein polymeres Diphenylmethandiisocyanat oder eine Kombination davon ist.

6. Ein Verfahren zum Bilden eines Dichtungsmittels, das die folgenden Schritte beinhaltet:
a) Bilden einer ersten Polyolmischung aus Polyoxyalkylenpolyethern mit einem an eine Vielzahl von Oxyalkylenen gebundenen Initiatorkern, wobei die Oxyalkylenmonomere mindestens zu 50 bis 85 Gewichtsprozent Butylenoxidmonomere beinhalten und der Initiator oder die Initiatormischung eine nominelle Funktionalität von 2 bis 4 aufweisen und das endgültige Polyol ein Molekulargewicht von 1 500 bis 8 000 aufweist;
b) Mischen der Polyolmischung aus Schritt a) mit einem stöchiometrischen Überschuss eines Polyisocyanats oder einer Mischung aus Polyisocyanaten, um ein Präpolymer mit einem Gehalt an freiem Isocyanat (NCO) von 2 bis 5 Gewichtsprozent des Präpolymers zu bilden;
c) Bilden eines Dichtungsmittels durch Aufbringen des Präpolymers aus Schritt b) auf ein Substrat.

7. Verfahren gemäß Anspruch 6, wobei das Präpolymer einen Gehalt an freiem Isocyanat von 2 bis 5 Gewichtsprozent des Präpolymers aufweist.

8. Verfahren gemäß Anspruch 6 oder 7, wobei das Polyol ein Molekulargewicht von 1 700 bis 6 000 aufweist.

9. Verfahren gemäß einem der Ansprüche 6 bis 8, wobei das Präpolymer eine Viskosität von 25 bis 300 Pa•s bei 25 °C aufweist.

10. Härtbares Dichtungssystem gemäß Anspruch 9, wobei das Polyisocyanat ein polycarbodiimidmodifiziertes Diphenylmethandiisocyanat, ein polymeres Diphenylmethandiisocyanat oder eine Kombination davon ist.

11. Ein reaktives, härtbares Dichtungsmittelsystem, das Folgendes beinhaltet:
a) ein Präpolymer, das ein Reaktionsprodukt einer Isocyanatkomponente ist, die mindestens ein Polyisocyanat und eine isocyanatreaktive Komponente umfasst, die mindestens ein Polyoxybutylenpolyoxypropylenpolyol umfasst, wobei das Polyol eine Funktionalität von 1,6 bis 3,5 und ein Zahlenmittel des Molekulargewichts von 1 500 bis 8 000 aufweist, wobei das Polyoxybutylenpolyoxypropylenpolyol zu 50 bis 85 Gewichtsprozent Polyoxybutylen enthält, und
b) einen Kettenverlängerer mit 2 oder mehr isocyanatreaktiven Gruppen.

12. Ein Verfahren zum Bilden eines Dichtungsmittelsystems, das die folgenden Schritte beinhaltet:
a) Bilden einer ersten Polyolmischung aus Polyoxyalkylenpolyethern mit einem an eine Vielzahl von Oxyalkylenen gebundenen Initiatorkern, wobei die Oxyalkylenmonomere mindestens 50 bis 85 Gewichtsprozent Butylenoxidmonomere beinhalten und der Initiator oder die Initiatormischung eine nominelle Funktionalität von 2 bis 4 aufweisen und das endgültige Polyol ein Molekulargewicht von 1 500 bis 8 000 aufweist;
b) Mischen der Polyolmischung aus Schritt a) mit einem stöchiometrischen Überschuss eines Polyisocyanats oder einer Mischung aus Polyisocyanaten, um ein Präpolymer mit einem Gehalt an freiem Isocyanat (NCO) von 1 bis 6 Gewichtsprozent des Präpolymers zu bilden;
c) Bilden eines Dichtungsmittels durch Zur-Reaktion-Bringen des Präpolymers aus Schritt b) mit einem Kettenverlängerer, der eine Vielzahl von isocyanatreaktiven Wasserstoffen aufweist.

13. Verfahren gemäß Anspruch 12, wobei das Präpolymer einen Gehalt an freiem Isocyanat von 2 bis 5 Gewichtsprozent des Präpolymers aufweist.

14. Verfahren gemäß Anspruch 12 oder 13, wobei das Polyol ein Molekulargewicht von 1 700 bis 6 000 aufweist.

15. Verfahren gemäß einem der Ansprüche 12 bis 14, wobei das Präpolymer eine Viskosität von 25 bis 300 Pa•s bei 25 °C aufweist.

## Revendications

1. Un système d'agent d'étanchéité durcissable à l'humidité, comprenant :
un prépolymère qui est un produit de la réaction d'un constituant isocyanate qui inclut au moins un polyisocyanate et d'un constituant réactif aux isocyanates qui inclut au moins un polyoxybutylène-polyoxypropylène polyol, le polyol ayant une fonctionnalité allant de 1,6 à 3,5 et une masse moléculaire moyenne en nombre allant de 1 500 à 8 000 où le polyoxybutylène-polyoxypropylène polyol contient 50 à 85 pour cent en poids de polyoxybutylène.

2. Le système d'agent d'étanchéité durcissable de la revendication 1 où le prépolymère a une teneur en isocyanate libre qui va de 1 à 6 pour cent en poids du prépolymère.

3. Le système d'agent d'étanchéité durcissable de la revendication 1 ou de la revendication 2 où le polyol a une masse moléculaire de 1 700 à 6 000.

4. Le système d'agent d'étanchéité durcissable de n'importe laquelle des revendications 1 à 3 où le prépolymère a une viscosité de 25 à 300 Pa•s à 25 °C.

5. Le système d'agent d'étanchéité durcissable de la revendication 4 où le polyisocyanate est un diphénylméthane diisocyanate monomère, un diphénylméthane diisocyanate à modification polycarbodiimide, un diphénylméthane diisocyanate polymère ou une combinaison de ceux-ci.

6. Un procédé de formation d'un agent d'étanchéité comprenant les étapes :
a) de formation d'un premier mélange de polyols de polyoxyalkylène polyéthers ayant un noyau amorceur fixé à une pluralité d'oxyalkylènes où les monomères oxyalkylènes comprennent au moins 50 à 85 pour cent en poids de monomères oxyde de butylène et l'amorceur ou le mélange d'amorceurs a une fonctionnalité nominale de 2 à 4 et le polyol final a une masse moléculaire de 1 500 à 8 000 ;
b) de mélange du mélange de polyols de l'étape a) avec un excès stœchiométrique d'un polyisocyanate ou d'un mélange de polyisocyanates afin de former un prépolymère ayant une teneur en isocyanate libre (NCO) de 2 à 5 pour cent en poids du prépolymère ;
c) de formation d'un agent d'étanchéité par application du prépolymère de l'étape b) sur un substrat.

7. Le procédé de la revendication 6 où le prépolymère a une teneur en isocyanate libre allant de 2 à 5 pour cent en poids du prépolymère.

8. Le procédé de la revendication 6 ou de la revendication 7 où le polyol a une masse moléculaire de 1 700 à 6 000.

9. Le procédé de l'une quelconque des revendications 6 à 8 où le prépolymère a une viscosité de 25 à 300 Pa•s à 25 °C.

10. Le système d'agent d'étanchéité durcissable de la revendication 9 où le polyisocyanate est un diphénylméthane diisocyanate à modification polycarbodiimide, un diphénylméthane diisocyanate polymère ou une combinaison de ceux-ci.

11. Un système d'agent d'étanchéité durcissable réactif, comprenant :
a) un prépolymère qui est un produit de la réaction d'un constituant isocyanate qui inclut au moins un polyisocyanate et d'un constituant réactif aux isocyanates qui inclut au moins un polyoxybutylène-polyoxypropylène polyol, le polyol ayant une fonctionnalité allant de 1,6 à 3,5 et une masse moléculaire moyenne en nombre allant de 1 500 à 8 000 où le polyoxybutylène-polyoxypropylène polyol contient 50 à 85 pour cent en poids de polyoxybutylène et
b) un allongeur de chaîne ayant 2 groupes réactifs aux isocyanates ou plus.

12. Un procédé de formation d'un agent d'étanchéité comprenant les étapes :
a) de formation d'un premier mélange de polyols de polyoxyalkylène polyéthers ayant un noyau amorceur fixé à une pluralité d'oxyalkylènes où les monomères oxyalkylène comprennent au moins 50 à 85 pour cent en poids de monomères oxyde de butylène et l'amorceur ou le mélange d'amorceurs a une fonctionnalité nominale de 2 à 4 et le polyol final a une masse moléculaire de 1 500 à 8 000 ;
b) de mélange du mélange de polyols de l'étape a) avec un excès stœchiométrique d'un polyisocyanate ou d'un mélange de polyisocyanates afin de former un prépolymère ayant une teneur en isocyanate libre (NCO) de 1 à 6 pour cent en poids du prépolymère ;
c) de formation d'un agent d'étanchéité par mise en réaction du prépolymère de l'étape b) avec un allongeur de chaîne ayant une pluralité d'hydrogènes réactifs aux isocyanates.

13. Le procédé de la revendication 12 où le prépolymère a une teneur en isocyanate libre allant de 2 à 5 pour cent en poids du prépolymère.

14. Le procédé de la revendication 12 ou de la revendication 13 où le polyol a une masse moléculaire de 1 700 à 6 000.

15. Le procédé de l'une quelconque des revendications 12 à 14, où le prépolymère a une viscosité de 25 à 300 Pa•s à 25 °C.
